# EUROPEAN PATENT APPLICATION

(11) **EP 2 530 967 A1**
(43) Date of publication of application: **05.12.2012**
(21) Application number: 11737143.5
(22) Date of filing: 28.01.2011
(51) Int. Cl.: H04W 24/02, H04W 12/08, H04W 88/08

(54) **MOBILE COMMUNICATION SYSTEM, OPERATION DEVICE, AND MOBILE COMMUNICATION METHOD**

(30) Priority: 29.01.2010 JP 2010019462
(71) Applicant: NTT DoCoMo, Inc., Tokyo 100-6150 (JP)
(72) Inventor: HOSONO, Hiroyuki, Tokyo 100-6150 (JP)
(74) Representative: HOFFMANN EITLE
(86) International application number: PCT/JP2011/051717
(87) International publication number: WO 2011/093433

(57) **Abstract**

A specific cell radio base station 20 transmits an update request to an operation apparatus 30 via the secured connection, the update request including at least identification information of an update target provided in the specific cell radio base station. The operation apparatus 30 provides an update information to the specific cell radio base station 20 via the secured connection in response to the update request.

## Description

### TECHNICAL FIELD

The present invention relates to a mobile communication system including a specific cell radio base station configured to manage a specific cell provided in an unmanaged network, an operation apparatus used in the mobile communication system, and a mobile communication method.

### BACKGROUND ART

In general, a network administrator carries out maintenance and operation of a radio base station configured to manage a macrocell (hereinafter referred to as a macrocell radio base station) in order to respond to randomly occurring connection requests from mobile communication terminals.

For example, the network administrator takes the following procedures to update updating targets (firmware, configuration data and the like) of the macrocell radio base station.

(1) The network administrator uses an operation apparatus to transmit update information (latest firmware, configuration data and the like) for updating the update target to the macrocell radio base station.

(2) The network administrator restarts the macrocell radio base station by remote control in an off-peak time period of the macrocell traffic, thereby reflecting the update information into the macrocell radio base station.

In other words, the network administrator manually reflects the update information into the macrocell radio base station after starting the operation of the macrocell radio base station.

Moreover, specific cells called CSG (Closed Subscriber Group) cells, home cells, femtocells and the like have been recently known (e.g., Non-patent document 1). A specific cell radio base station configured to manage such a specific cell is also expected to update update information by taking the same procedures as those taken by the macrocell radio base station.

### PRIOR ART DOCUMENT

### NON-PATENT DOCUMENT

Non-patent document 1: 3GPP TSG RAN #35 RP-070209 Lemesos, Cyprus, March 6-9, 2007, http://www.3gpp.org/ftp/tsg_ran/TSG_RAN/TSGR_35/Docs/)

### SUMMARY OF THE INVENTION

Here, the specific cell radio base station is a radio base station installed by a user, and therefore has the following concerns:

(1) Spoofing by illegitimate specific cell radio base stations or spoofing by an illegitimate telecommunications carrier;
(2) Data tampering or illegal interception on a path not managed by a telecommunications carrier;
(3) Complicated work of manually reflecting update information by a user; and
(4) Complicated processing of identifying update information for a service provided by the specific cell radio base station, and transmitting the identified update information to the specific cell radio base station.
Therefore, the present invention has been in consideration of the foregoing problems. It is an objective of the present invention to provide a mobile communication system, an operation apparatus and a mobile communication method, enabling secure and easy update of an update target in a specific cell radio base station.

A mobile communication system according the first feature includes: an unmanaged network that is not under the control of a telecommunications carrier; a managed network that is under the control of the telecommunications carrier; a security gateway device provided in the managed network; an operation apparatus; and a specific cell radio base station configured to manage a specific cell provided in the unmanaged network. The specific cell radio base station and the security gateway device are configured to establish a secured connection between the specific cell radio base station and the security gateway device when the specific cell radio base station and the security gateway device are both authenticated as authorized. The specific cell radio base station includes a transmission unit configured to transmit an update request to the operation apparatus via the secured connection, the update request including at least identification information of an update target provided in the specific cell radio base station, and an update unit configured to update the update target provided in the specific cell radio base station based on update information for updating the update target. The operation apparatus includes an acquisition unit configured to acquire the update information for updating the update target based on the identification information of the update target included in the update request, and a provision unit configured to provide the update information to the specific cell radio base station via the secured connection.

In the first feature, the update request may further include identification information of the specific cell radio base station in addition to the identification information of the update target. The acquisition unit may acquire the update information for updating the update target, based on the identification information of the update target and the identification information of the specific cell radio base station.

In the first feature, the update request may further include installation site identification information configured to enable an installation site of the specific cell radio base station to be identified, in addition to the identification information of the update target. The acquisition unit may acquire the update information for updating the update target, based on the identification information of the update target and the installation site identification information.

In the first feature, the update request may further include owner identification information configured to enable an owner of the specific cell radio base station to be identified, in addition to the identification information of the update target. The acquisition unit acquires the update information for updating the update target, based on the identification information of the update target and the owner identification information.

In the first feature, the update request further includes service attribute identification information configured to enable an attribute of a service provided by the specific cell radio base station to be identified, in addition to the identification information of the update target. The acquisition unit acquires the update information for updating the update target, based on the identification information of the update target and the service attribute identification information.

In the first feature, the update unit may update the update target based on the update information when a traffic volume in the specific cell is not more than a predetermined threshold.

An operation apparatus according the second feature is configured to provide information to a specific cell radio base station in a mobile communication system including an unmanaged network that is not under the control of a telecommunications carrier, a managed network that is under the control of the telecommunications carrier, and a specific cell radio base station configured to manage a specific cell provided in the unmanaged network, the specific cell radio base station and the security gateway device which are configured to establish a secured connection between the specific cell radio base station and the security gateway device when the specific cell radio base station and the security gateway device are both authenticated as authorized. The operation apparatus includes: a reception unit configured to receive an update request from the specific cell radio base station via the secured connection, the update request including at least identification information of an update target provided in the specific cell radio base station; an acquisition unit configured to acquire update information for updating the update target based on the identification information of the update target included in the update request; and a provision unit configured to provide the update information to the specific cell radio base station via the secured connection.

A mobile communication method according the third feature is applied to a mobile communication system including an unmanaged network that is not under the control of a telecommunications carrier, a managed network that is under the control of the telecommunications carrier, a security gateway device provided in the managed network, an operation apparatus, and a specific cell radio base station configured to manage a specific cell provided in the unmanaged network. The method includes the steps of : establishing, by the specific cell radio base station and the security gateway device, a secured connection between the specific cell radio base station and the security gateway device when the specific cell radio base station and the security gateway device are both authenticated as authorized; transmitting an update request from the specific cell radio base station to the security gateway device via the secured connection, the update request including at least identification information of an update target provided in the specific cell radio base station; acquiring, by the operation apparatus, update information for updating the update target based on the identification information of the update target included in the update request; providing, by the operation apparatus, the update information to the specific cell radio base station via the secured connection; and updating, by the specific cell radio base station, the update target in the specific cell radio base station based on the update information for updating the update target.

### BRIEF DESCRIPTION OF DRAWINGS

Fig. 1 is a diagram showing a mobile communication system 100 according to a first embodiment.
Fig. 2 is a diagram showing a specific cell radio base station 20 according to the first embodiment.
Fig. 3 is a diagram showing an operation apparatus 30 according to the first embodiment.
Fig. 4 is a table showing an example of information stored in a storage unit 32 according to the first embodiment.
Fig. 5 is a table showing an example of information stored in the storage unit 32 according to the first embodiment.
Fig. 6 is a table showing an example of information stored in the storage unit 32 according to the first embodiment.
Fig. 7 is a table showing an example of information stored in the storage unit 32 according to the first embodiment.
Fig. 8 is a table showing an example of information stored in the storage unit 32 according to the first embodiment.
Fig. 9 is a sequence diagram showing operations of the mobile communication system 100 according to the first embodiment.
Fig. 10 is a diagram showing a mobile communication system 100 according to Modified Example 1.

### MODE FOR CARRYING OUT THE INVENTION

A mobile communication system according to an embodiment of the present invention is described below with reference to the drawings. Note that, in the following description of the drawings, same or similar reference numerals denote same or similar elements and portions.

In addition, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

### [Overview of Embodiment]

A mobile communication system according to the embodiment includes an unmanaged network that is not under the control of a telecommunications carrier, a managed network that is under the control of the telecommunications carrier, a security gateway device provided in the managed network, an operation apparatus, and a specific cell radio base station configured to manage a specific cell provided in the unmanaged network. The specific cell radio base station and the security gateway device are configured to establish a secured connection between the specific cell radio base station and the security gateway device when the specific cell radio base station and the security gateway device are both authenticated as authorized. The specific cell radio base station includes a transmission unit configured to transmit an update request to the operation apparatus via the secured connection, the update request including at least identification information of an update target provided in the specific cell radio base station, and an update unit configured to update the update target provided in the specific cell radio base station based on update information for updating the update target. The operation apparatus includes an acquisition unit configured to acquire the update information for updating the update target based on the identification information of the update target included in the update request, and a provision unit configured to provide the update information to the specific cell radio base station via the secured connection.

In the embodiment, the specific cell radio base station transmits the update request including at least the identification information of the update target to the operation apparatus via the secured connection. In response to the update request, the operation apparatus provides the update information to the specific cell radio base station via the secured connection.

Thus, even when the specific cell radio base station is provided in the unmanaged network not under the control of the telecommunications carrier, the update target in the specific cell radio base station can be securely and easily updated.

Note that, in the embodiment, it is preferable that the specific cells be cells provided on a small scale and a large scale. Moreover, it is preferable that the specific cells be cells managed by a HNB (Home Node B) , a HeNB (Home Evolved Node B), a femto BTS, and the like. More specifically, the specific cell radio base station is the HNB, HeNB, femto BTS or the like.

### [First Embodiment]

### (Configuration of Mobile Communication System)

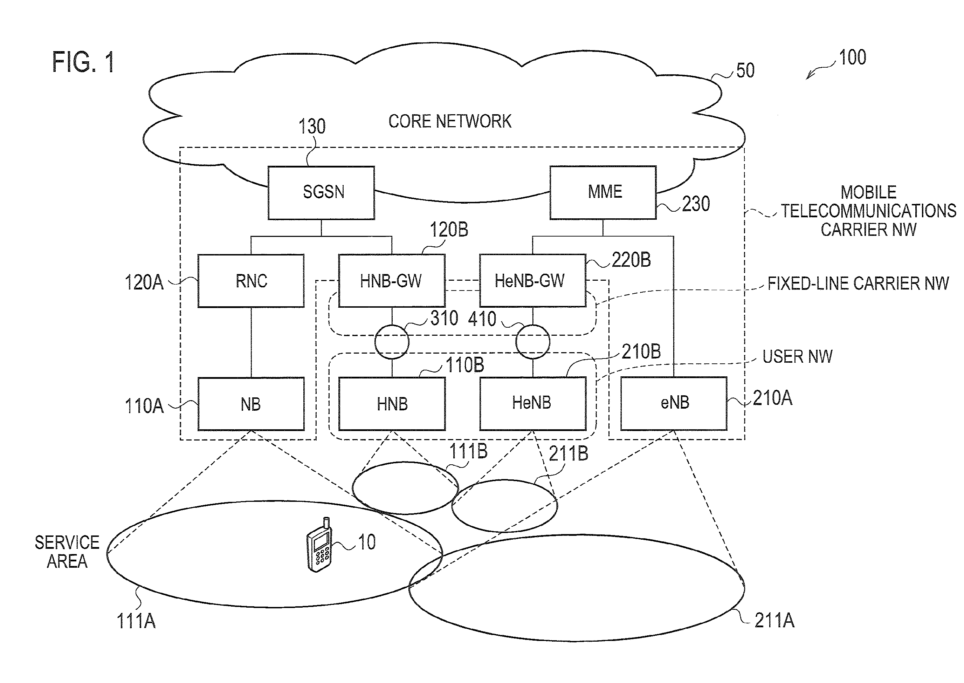

A configuration of a mobile communication system according to a first embodiment is described below with reference to the drawings. Fig. 1 is a diagram showing a mobile communication system 100 according to the first embodiment.

As shown in Fig. 1, the mobile communication system 100 includes a communication terminal device 10 (hereinafter referred to as the UE 10) and a core network 50. The mobile communication system 100 also includes a first communication system and a second communication system. The mobile communication system 100 further includes an access node 310 and an access node 410.

The first communication system is, for example, a communication system compatible with a UMTS (Universal Mobile Telecommunication System). The first communication system includes a base station 110A (hereinafter referred to as the NB 110A), a home base station 110B (hereinafter referred to as the HNB 110B), an RNC 120A, a home base station gateway 120B (hereinafter referred to as the HNB-GW 120B), and a SGSN 130.

Note that a radio access network (UTRAN: Universal Terrestrial Radio Access Network) compatible with the first communication system includes the NB 110A, HNB 110B, RNC 120A and HNB-GW 120B.

The second communication system is, for example, a communication system compatible with an LTE (Long Term Evolution). The second communication system includes a base station 210A (hereinafter referred to as the eNB 210A), a home base station 210B (hereinafter referred to as the HeNB 210B) , a home base station gateway 220B (hereinafter referred to as the HeNB-GW 220B), and an MME 230.

Note that a radio access network (E-UTRAN: Evolved Universal Terrestrial Radio Access Network) compatible with the second communication system includes the eNB 210A, HeNB 210B and HeNB-GW 220B.

In the first embodiment, the HNB 110B and the access node 310 are connected through a user NW (Network). Similarly, the HeNB 210B and the access node 410 are connected through the user NW (Network). Meanwhile, the access node 310 and the HNB-GW 120B are connected through a fixed-line carrier NW (Network). Similarly, the access node 410 and the HeNB-GW 220B are connected through the fixed-line carrier NW (Network). Furthermore, the NB 110A, RNC 120A, HNB-GW 120B, SGSN 130, eNB 210A, HeNB-GW 220B and MME 230 are connected through a mobile telecommunications carrier NW (Network).

Note that the user NW is a network (such as a LAN) arbitrarily configured by a user who installs the HNB 110B or the HeNB 210B. The fixed-line carrier NW is a network (such as FTTH or ADSL) under the control of a fixed-line carrier to which the user who installs the HNB 110B or the HeNB 210B subscribes. The mobile telecommunications carrier NW is a network under the control of a telecommunications carrier.

That is, the user NW and the fixed-line carrier NW are unmanaged networks not under the control of the carrier, while the mobile telecommunications carrier NW is a managed network under the control of the telecommunications carrier.

The UE 10 is a device (User Equipment) configured to communicate with the first communication system or the second communication system. For example, the UE 10 has a function to perform radio communication with the NB 110A and the HNB 110B, or a function to perform radio communication with the eNB 210A and the HeNB 210B.

The NB 110A is a device (NodeB) having a macrocell 111A and configured to perform radio communication with the UE 10 present in the macrocell 111A.

The HNB 110B is a device (Home NodeB) having a specific cell 111B and configured to perform radio communication with the UE 10 present in the specific cell 111B. For example, the HNB 110B has a function to authenticate the HNB-GW 120B as an authorized one.

The RNC 120A is a device (Radio Network Controller) connected to the NB 110A and configured to establish a radio connection (RRC Connection) with the UE 10 present in the macrocell 111A.

The HNB-GW 120B is a device (Home NodeB Gateway) connected to the HNB 110B through the access node 310 and configured to establish a radio connection (RRC Connection) with the UE 10 present in the specific cell 111B. Moreover, the HNB-GW 120B functions as a security gateway (security gateway device) to protect the mobile telecommunications carrier NW from the other NWs. For example, the HNB-GW 120B has a function to authenticate the HNB 110B as an authorized one.

In the first embodiment, the HNB 110B and the HNB-GW 120B establish a secured connection (e.g., a VPN connection; Virtual Private Network Connection) therebetween when the HNB 110B and the HNB-GW 120B are both authenticated as an authorized one.

The SGSN 130 is a device (Serving GPRS Support Node) configured to perform packet switching in a packet-switched domain. The SGSN 130 is provided in the core network 50. Although omitted in Fig. 1, a device (MSC; Mobile Switching Center) configured to perform circuit switching in a circuit-switched domain may be provided in the core network 50.

The eNB 210A is a device (evolved NodeB) having a macrocell 211A and configured to perform radio communication with the UE 10 present in the macrocell 211A.

The HeNB 210B is a device (Home evolved NodeB) having a specific cell 211B and configured to perform radio communication with the UE 10 present in the specific cell 211B. For example, the HeNB 210B has a function to authenticate the HeNB-GW 220B as an authorized one.

The HeNB-GW 220B is a device (Home evolved NodeB Gateway) connected to the HeNB 210B through the access node 410 and configured to manage the HeNB 210B. Moreover, the HeNB-GW 220B functions as a security gateway (security gateway device) to protect the mobile telecommunications carrier NW from the other NWs. For example, the HeNB-GW 220B has a function to authenticate the HeNB 210B as an authorized one.

In the first embodiment, the HeNB 210B and the HeNB-GW 220B establish a secured connection (e.g., a VPN connection; Virtual Private Network Connection) therebetween when the HeNB 210B and the HeNB-GW 220B are both authenticated as authorized.

The MME 230 is a device (Mobility Management Entity) connected to the eNB 210A and configured to manage the mobility of the UE 10 having a radio connection established with the eNB 210A. Moreover, the MME 230 is a device connected to the HeNB 210B through the HeNB-GW 220B and configured to manage the mobility of the UE 10 having a radio connection established with the HeNB 210B.

The access node 310 is connected to the HNB 110B, and provides the HNB 110B with connection information provided by a fixed-line carrier the user who has installed the HNB 110B subscribes to. Specifically, the access node 310 authenticates the HNB 110B as an authorized one, based on authentication information received from the HNB 110B. Then, the access node 310 transmits the connection information to the HNB 110B.

For example, the access node 310 is a terminal device (BAS; Broadband Access Server) of PPPoE (Point-to-Point over Ethernet (registered trademark)). The authentication information is an ID or password required to authenticate the HNB 110B. The connection information is an IP address or the like to be assigned to the HNB 110B.

The access node 410 is connected to the HeNB 210B, and provides the HeNB 210B with connection information provided by a fixed-line carrier, with which the user of the installed HeNB 210B having contract. Specifically, the access node 410 authenticates the HeNB 210B as an authorized one, based on authentication information received from the HeNB 210B. Then, the access node 410 transmits the connection information to the HeNB 210B.

For example, the access node 410 is a terminal device (BAS; Broadband Access Server) of PPPoE (Point-to-Point over Ethernet (registered trademark)). The authentication information is an ID or password required to authenticate the HeNB 210B. The connection information is an IP address or the like to be assigned to the HeNB 210B.

In the embodiment, the macrocell and the specific cell should be understood as the function to perform the radio communication with the UE 10. However, the macrocell and the specific cell are also used as the term representing a service area of each cell. Moreover, the cells such as the macrocell and the specific cell are distinguished from each other by frequency, spread code, time slot or the like used in the cell.

The specific cell may be called a femtocell, CSG (Closed Subscriber Group) cell, home cell or the like. Moreover, the specific cell is configured to be settable with an access type for defining the UE 10 allowed to access the specific cell. The access types are "Closed," "Hybrid" and "Open."

The "Closed" specific cell is configured to permit only a specific user (UE; User Equipment) managed by the specific cell to receive provision of services.

The "Hybrid" specific cell is configured to permit a specific user managed by the specific cell to perform communications with a high quality and is configured to permit a non-specific user not managed by the specific cell to perform communications with a best effort quality.

The "Open" specific cell is configured to permit all the UEs 10 to receive provision of services, as is the case with the macrocell Here, in the "Open" cell, UEs 10 can perform communications with equal quality without being distinguished as to whether the UEs 10 are managed by the specific cell.

Note that the access type may also be "ACCESS CLASS BARRED" for prohibiting an access of the UE 10 for each access class or "CELL BARRED" for prohibiting an access of the UE 10 for each cell.

### (Configuration of Specific cell Radio Base Station)

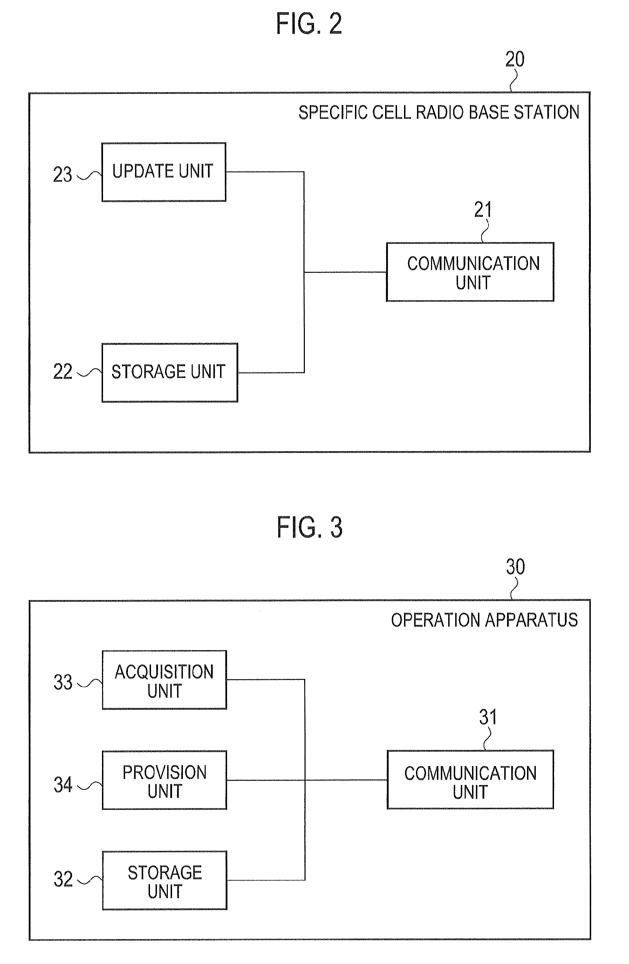

A configuration of a specific cell radio base station according to the first embodiment is described below with reference to the drawings. Fig. 2 is a diagram showing a specific cell radio base station 20 according to the first embodiment. The specific cell radio base station 20 is a radio base station configured to manage a specific cell, and is the HNB 110B or HeNB 210B.

As shown in Fig. 2, the specific cell radio base station 20 includes a communication unit 21, a storage unit 22 and an update unit 23.

The communication unit 21 communicates with the UE 10. Moreover, the communication unit 21 communicates with an access node (e.g., the access node 310 or access node 410) managed by the fixed-line carrier, and with a security gateway device (e.g., the HNB-GW 120B or HeNB-GW 220B) managed by a telecommunications carrier. Furthermore, the communication unit 21 communicates with an operation apparatus 30 to be described later.

Specifically, the communication unit 21 transmits authentication information (e.g., an ID or a password) to the access node, the authentication information being used by the access node to authenticate the specific cell radio base station 20. The communication unit 21 receives connection information (e.g., an IP address) from the access node.

Moreover, the communication unit 21 transmits authentication information (e.g., a pre-shared key) to the security gateway device, the authentication information being used by the security gateway device to authenticate the specific cell radio base station 20. The communication unit 21 also receives authentication information (e.g., a pre-shared key) from the security gateway device, the authentication information being used by the specific cell radio base station 20 to authenticate the security gateway device.

Furthermore, the communication unit 21 transmits an update request for updating of an update target to the operation apparatus 30 via a secured connection (e. g. , a VPN connection) . The communication unit 21 receives update information for updating the update target from the operation apparatus 30 via the secured connection (e.g., the VPN connection).

Here, the update request includes at least identification information of the update target. The identification information of the update target is information to identify the type of the update target, the version of the update target, or the like. The update request may also include the following information in addition to the identification information of the update target.

### (1) Identification information of Specific cell Radio Base Station 20

The identification information of the specific cell radio base station 20 may be identification information (e.g. , a CSG ID) to identify the specific cell managed by the specific cell radio base station 20.

### (2) Installation Site Identification Information Configured to Enable Installation Site of Specific cell Radio Base Station 20 to be Identified

The installation site identification information may be latitude and longitude information acquired by a GPS function provided in the specific cell radio base station 20, for example. The installation site identification information may also be identification information (such as a cell ID) on a radio base station (specific cell radio base station or macrocell radio base station) provided around the specific cell radio base station 20.

### (3) Owner Identification Information Configured to Enable Owner of Specific cell Radio Base Station 20 to be Identified

The owner identification information may be a user ID (IMSI: International Mobile Subscriber Identity) for identifying the owner of the specific cell radio base station 20. If the operation apparatus 30 already knows a correspondence relationship between the owner of the specific cell radio base station 20 and the identification information of the specific cell radio base station 20, the owner identification information may be the identification information of the specific cell radio base station 20. The owner identification information may be configured to enable subscriber information on the owner of the specific cell radio base station 20 to be identified.

### (4) Service Attribute Identification Information Configured to Enable Service Attribute Provided by Specific cell Radio Base Station 20 to be Identified

The service attribute identification information may be information to identify attributes of services (e.g., a coupon distribution service or a home appliance coordination service) provided by the specific cell radio base station 20. If the operation apparatus 30 already knows a correspondence relationship between the attributes of the services provided by the specific cell radio base station 20 and the identification information of the specific cell radio base station 20, the service attribute identification information may be the identification information of the specific cell radio base station 20.

Note that the communication unit 21 may regularly transmit the update requests, or may transmit the update request according to an instruction from the operation apparatus 30. Alternatively, the communication unit 21 may transmit the update request in response to a user operation such as a button operation, or may transmit the update request at a predetermined timing.

The storage unit 22 stores an update target. The update target is, for example, software installed on the specific cell radio base station 20, configuration data on the specific cell radio base station 20, and the like.

The update unit 23 updates the update target stored in the storage unit 22, based on the update information received from the operation apparatus. Here, it should be noted that updating of the update target may require restarting of the specific cell radio base station 20.

The update unit 23 may update the update target in response to a button operation by the user, or may update the update target when a traffic volume in a specific cell is not more than a predetermined threshold. Alternatively, the update unit 23 may update the update target at a predetermined timing.

### (Configuration of Operation apparatus)

A configuration of an operation apparatus according to the first embodiment is described below with reference to the drawings. Fig. 3 is a diagram showing the operation apparatus 30 according to the first embodiment. It is preferable that the operation apparatus 30 is provided in the mobile telecommunications carrier NW (managed network). The operation apparatus 30 may be, for example, the RNC 120A, HNB-GW 120B, SGSN 130, HeNB-GW 220B, MME 230 or the like.

As shown in Fig. 3, the operation apparatus 30 includes a communication unit 31, a storage unit 32, an acquisition unit 33 and a provision unit 34.

The communication unit 31 communicates with the specific cell radio base station 20. For example, the communication unit 31 receives an update request for updating of an update target from the specific cell radio base station 20 via a secured connection (e.g., a VPN connection). The communication unit 21 transmits update information for updating the update target to the specific cell radio base station 20 via the secured connection (e.g., the VPN connection).

The storage unit 32 stores the update information for updating the update target provided in the specific cell radio base station 20.

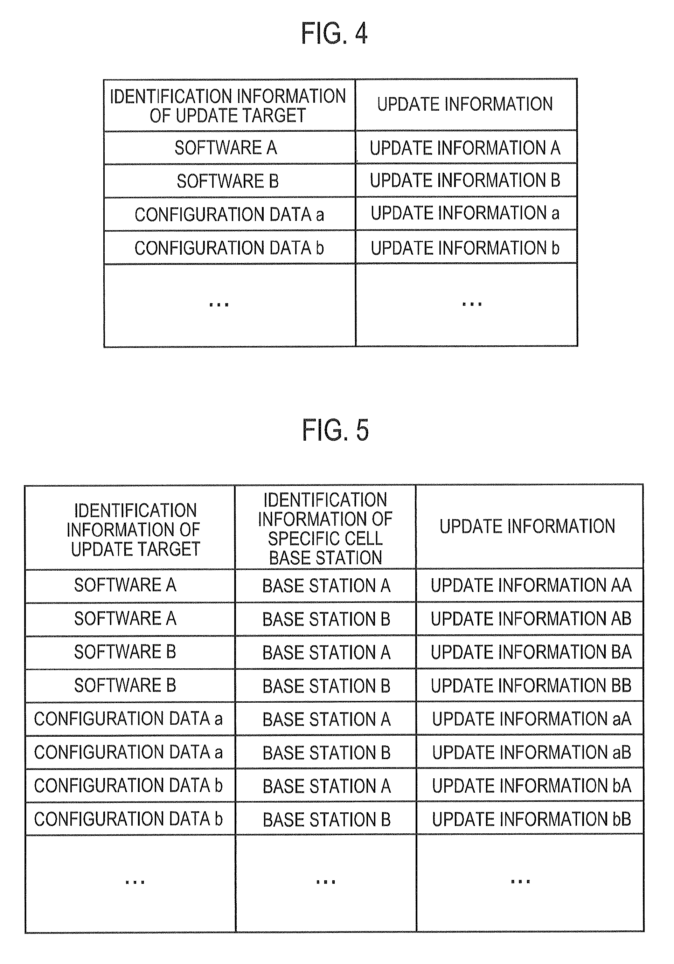

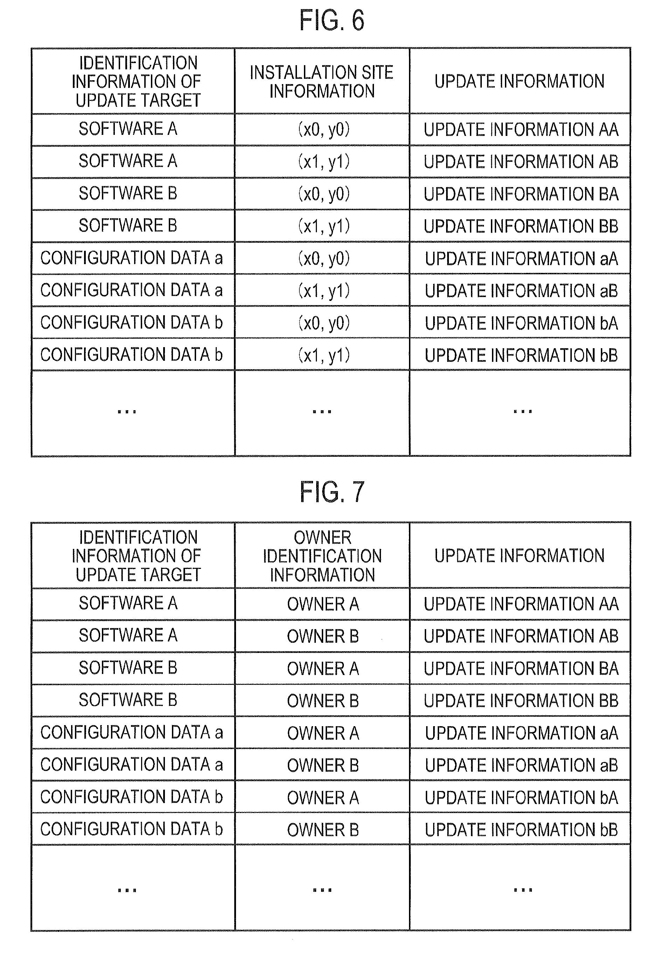

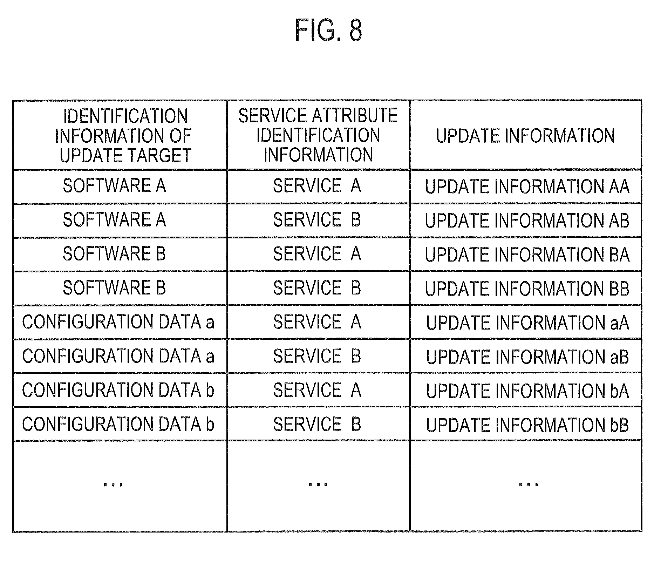

Specifically, as shown in Fig. 4, the storage unit 32 stores the update information in association with identification information of update targets. Alternatively, as shown in Fig. 5, the storage unit 32 stores the update information in association with the identification information of the update targets and identification information of specific cell radio base stations. Alternatively, as shown in Fig. 6, the storage unit 32 stores the update information in association with the identification information of the update targets and installation site identification information. Alternatively, as shown in Fig. 7, the storage unit 32 stores the update information in association with the identification information of the update targets and owner identification information. Alternatively, as shown in Fig. 8, the storage unit 32 stores the update information in association with the identification information of the update targets and service attribute identification information.

The acquisition unit 33 acquires the update information for updating the update target provided in the specific cell radio base station 20, based on the identification information of the update target included in the update request received from the specific cell radio base station 20.

Specifically, the acquisition unit 33 acquires the update information associated with the identification information of the update target included in the update request, by referring to the information shown in Fig. 4. Alternatively, the acquisition unit 33 acquires the update information associated with the identification information of the update target included in the update request and the identification information of the specific cell radio base stations, by referring to the information shown in Fig. 5. Alternatively, the acquisition unit 33 acquires the update information associated with the identification information of the update target included in the update request and the installation site identification information, by referring to the information shown in Fig. 6. Alternatively, the acquisition unit 33 acquires the update information associated with the identification information of the update target included in the update request and the owner identification information, by referring to the information shown in Fig. 7. Alternatively, the acquisition unit 33 acquires the update information associated with the identification information of the update target included in the update request and the service attribute identification information, by referring to the information shown in Fig. 8.

Note that the acquisition unit 33 may also acquire subscriber information on the owner of the specific cell radio base station 20 from an HLR (Home Location Register) or the like. In such a case, the acquisition unit 33 acquires the update information for updating the update target provided in the specific cell radio base station 20, based on the identification information of the update target and the subscriber information.

The provision unit 34 provides the update information acquired by the acquisition unit 33 to the specific cell radio base station 20. Specifically, the provision unit 34 provides the update information to the specific cell radio base station 20 via a secured connection.

Note that the provision unit 34 may determine whether or not the update target needs to be updated, based on the identification information of the update target. For example, the provision unit 34 determines whether or not the update target is the latest version, based on version information on the update target. If the update target is the latest version, the provision unit 34 notifies the specific cell radio base station 20 to the effect that the update target is the latest version, without providing the update information.

Meanwhile, the acquisition unit 33 may perform the determination of whether or not the update target needs to be updated. In other words, the determination of whether or not the update target needs to be updated may be performed before the acquisition of the update information.

### (Operations of Mobile Communication System)

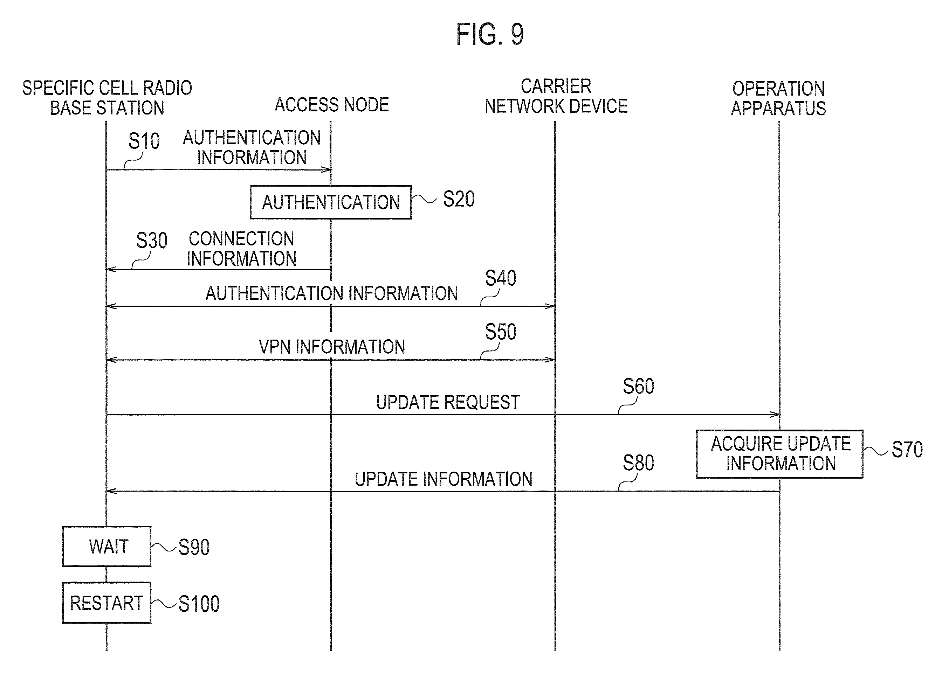

With reference to the drawing, operations of the mobile communication system according to the first embodiment are described below. Fig. 9 is a sequence diagram showing operations of the mobile communication system 100 according to the first embodiment. Note that in Fig. 9, a specific cell radio base station is, for example, the HNB 110B or HeNB 210B. An access node is, for example, the access node 310 or access node 410. A security gateway device is, for example, the HeNB-GW 220B or HNB-GW 120B. Note that an operation apparatus is the operation apparatus 30, as a matter of course.

As shown in Fig. 9, in Step 10, the specific cell radio base station transmits authentication information (e.g., an ID or password) to the access node.

In Step 20, the access node authenticates the specific cell radio base station as an authorized one, based on the authentication information. Here, the description is continued assuming that the specific cell radio base station is authenticated as an authorized one.

In Step 30, the access node transmits connection information (e.g., an IP address or the like) to the specific cell radio base station.

In Step 40, the specific cell radio base station and the security gateway device exchange authentication information (e.g., pre-shared keys). Moreover, the specific cell radio base station and the security gateway device authenticate each other as authorized. Here, the description is continued assuming that the specific cell radio base station and the security gateway device are both authenticated as authorized.

In Step 50, the specific cell radio base station and the security gateway device exchange information required to establish a secured connection (e.g. , a VPN connection). Thus, the secured connection (e.g., the VPN connection) is established between the specific cell radio base station and the security gateway device.

In Step 60, the specific cell radio base station transmits an update request for updating of an update target to the operation apparatus via the secured connection (e.g., the VPN connection).

In Step 70, the operation apparatus acquires update information for updating the update target, based on the information included in the update request.

In Step 80, the operation apparatus transmits the update information for updating the update target to the specific cell radio base station via the secured connection (e.g., the VPN connection).

In Step 90, the specific cell radio base station waits until the timing for updating of the update target comes.

In Step 100, the specific cell radio base station updates the update target based on the update information. For example, the specific cell radio base station updates the update target based on the update information received from the operation apparatus when a traffic volume in the specific cell is not more than a predetermined threshold.

Note that the operation apparatus may transmit the update information when the traffic volume in the specific cell is not more than the predetermined threshold. In such a case, the specific cell radio base station may skip the processing in Step 90 and update the update target upon receipt of the update information.

### (Advantageous Effects)

In the first embodiment, the specific cell radio base station 20 transmits the update request including at least the identification information of the update target to the operation apparatus 30 via the secured connection. In response to the update request, the operation apparatus 30 provides the update information to the specific cell radio base station 20 via the secured connection.

Thus, even when the specific cell radio base station 20 is provided in an unmanaged network not under the control of a telecommunications carrier, the update target provided in the specific cell radio base station 20 can be securely and easily updated.

In the first embodiment, the specific cell radio base station 20 updates the update target based on the update information received from the operation apparatus 30 when the traffic volume in the specific cell is not more than the predetermined threshold.

Thus, in a case where the specific cell radio base station 20 is restarted to update the update information, adverse effects such as disconnected communication between the specific cell and the UE 10 can be reduced.

### [Modified Example 1]

With reference to the drawing, Modified Example 1 of the first embodiment is described below. The following description is given mainly of differences from the first embodiment.

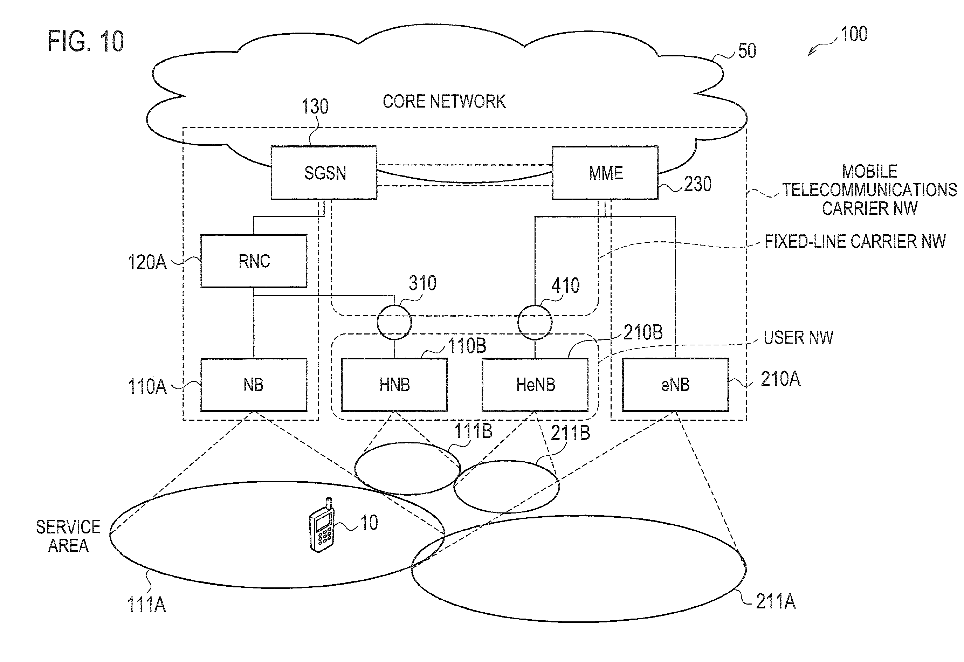

Specifically, in the first embodiment, a host node of the HNB 110B is the HNB-GW 120B. On the other hand, in Modified Example 1, a host node of the HNB 110B is the RNC 120A, as shown in Fig. 10.

In Modified Example 1, the RNC 120A manages the HNB 110B on behalf of the HNB-GW 120B. That is, the RNC 120A provides the devices under the control of the RNC 120A with the same functions as those of the HNB-GW 120B.

Moreover, in the first embodiment, a host node of the HeNB 210B is the HeNB-GW 220B. On the other hand, in Modified Example 1, a host node of the HeNB 210B is the MME 230, as shown in Fig. 10.

In Modified Example 1, on behalf of the HeNB-GW 220B, the HeNB 210B provides the devices under the control of the HeNB 210B with the same functions as those of the HeNB-GW 220B.

Note that only the HNB-GW 120B may be omitted, or only the HeNB-GW 220B may be omitted.

### [Other Embodiments]

While the present invention has been described by using the embodiment described above. However, it should not be understood that the description and drawings which constitute part of this disclosure limit the present invention. From this disclosure, various alternative embodiments, examples, and operation techniques will be easily found by those skilled in the art.

In the above embodiment, the description was given of the case where the constituent elements (the communication unit 31, the storage unit 32, the acquisition unit 33 and the provision unit 34) in the operation apparatus 30 are all provided in one device. However, the embodiment is not limited thereto, but the communication unit 31, the storage unit 32, the acquisition unit 33 and the provision unit 34 may be provided in separate devices, respectively. For example, the storage unit 32 may be provided in a server provided in the core network 50.

In the communication between the respective devices, control signals such as RANAP (Radio Access Network Application Part), NBAP (Node B Application Part), RNSAP (Radio Network Subsystem Application Part), and HNBAP (Home Node B Application Part) are used.

Note that the operations of a specific cell radio base station 20 and the operation apparatus 30 may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in a specific cell radio base station 20 and the operation apparatus 30. Also, the storage medium and the processor may be provided in a specific cell radio base station 20 and the operation apparatus 30 as a discrete component.

Note that the entire content of Japanese Patent Application No. 2010-019462 (filed on January 29, 2010) is incorporated herein by reference.

### INDUSTRIAL APPLICABILITY

The present invention is useful in radio communication and the like since the invention can provide a mobile communication system, an operation apparatus and a mobile communication method, which enable an update target in a specific cell radio base station to be securely and easily updated.

### EXPLANATION OF THE REFERENCE NUMERALS

10... communication terminal device, 20... specific cell radio base station, 21... communication unit, 22... storage unit, 23... update unit, 30... operation apparatus, 31... communication unit, 32... storage unit, 33... acquisition unit, 34... provision unit, 50... core network, 100... mobile communication system, 110A... NB, 110B... HNB, 111A... macrocell, 111B... specific cell, 120A... RNC, 120B...HNB-GW, 130... SGSN, 210A... eNB, 210B... HeNB, 211A... macrocell, 211B... specific cell, 220B... HeNB-GW, 230... MME, 310... access node, 410... access node

## Claims

1. A mobile communication system comprising:
an unmanaged network that is not under the control of a telecommunications carrier;
a managed network that is under the control of the telecommunications carrier;
a security gateway device provided in the managed network;
an operation apparatus; and
a specific cell radio base station configured to manage a specific cell provided in the unmanaged network,
wherein the specific cell radio base station and the security gateway device are configured to establish a secured connection between the specific cell radio base station and the security gateway device when the specific cell radio base station and the security gateway device are both authenticated as authorized,
the specific cell radio base station includes a transmission unit configured to transmit an update request to the operation apparatus via the secured connection, the update request including at least identification information of an update target provided in the specific cell radio base station, and an update unit configured to update the update target provided in the specific cell radio base station based on update information for updating the update target, and
the operation apparatus includes an acquisition unit configured to acquire the update information for updating the update target based on the identification information of the update target included in the update request, and a provision unit configured to provide the update information to the specific cell radio base station via the secured connection.

2. The mobile communication system according to claim 1, wherein
the update request further includes identification information of the specific cell radio base station in addition to the identification information of the update target, and
the acquisition unit acquires the update information for updating the update target, based on the identification information of the update target and the identification information of the specific cell radio base station.

3. The mobile communication system according to claim 1, wherein
the update request further includes installation site identification information configured to enable an installation site of the specific cell radio base station to be identified, in addition to the identification information of the update target, and
the acquisition unit acquires the update information for updating the update target, based on the identification information of the update target and the installation site identification information.

4. The mobile communication system according to claim 1, wherein
the update request further includes owner identification information configured to enable an owner of the specific cell radio base station to be identified, in addition to the identification information of the update target, and
the acquisition unit acquires the update information for updating the update target, based on the identification information of the update target and the owner identification information.

5. The mobile communication system according to claim 1, wherein
the update request further includes service attribute identification information configured to enable an attribute of a service provided by the specific cell radio base station to be identified, in addition to the identification information of the update target, and
the acquisition unit acquires the update information for updating the update target, based on the identification information of the update target and the service attribute identification information.

6. The mobile communication system according to claim 1, wherein
the update unit updates the update target based on the update information when a traffic volume in the specific cell is not more than a predetermined threshold.

7. An operation apparatus configured to provide information to a specific cell radio base station in a mobile communication system including an unmanaged network that is not under the control of a telecommunications carrier, a managed network that is under the control of the telecommunications carrier, and a specific cell radio base station configured to manage a specific cell provided in the unmanaged network, the specific cell radio base station and the security gateway device which are configured to establish a secured connection between the specific cell radio base station and the security gateway device when the specific cell radio base station and the security gateway device are both authenticated as authorized, the operation apparatus comprising:
a reception unit configured to receive an update request from the specific cell radio base station via the secured connection, the update request including at least identification information of an update target provided in the specific cell radio base station;
an acquisition unit configured to acquire update information for updating the update target based on the identification information of the update target included in the update request; and
a provision unit configured to provide the update information to the specific cell radio base station via the secured connection.

8. A mobile communication method applied to a mobile communication system including an unmanaged network that is not under the control of a telecommunications carrier, a managed network that is under the control of the telecommunications carrier, a security gateway device provided in the managed network, an operation apparatus, and a specific cell radio base station configured to manage a specific cell provided in the unmanaged network, the method comprising the steps of:
establishing, by the specific cell radio base station and the security gateway device, a secured connection between the specific cell radio base station and the security gateway device when the specific cell radio base station and the security gateway device are both authenticated as authorized;
transmitting an update request from the specific cell radio base station to the security gateway device via the secured connection, the update request including at least identification information of an update target provided in the specific cell radio base station;
acquiring, by the operation apparatus, update information for updating the update target based on the identification information of the update target included in the update request;
providing, by the operation apparatus, the update information to the specific cell radio base station via the secured connection; and
updating, by the specific cell radio base station, the update target in the specific cell radio base station based on the update information for updating the update target.
